Europäisches Patentamt

European Patent Office

Office européen des brevets

(19)

(11) Publication number: **0 574 766 A1**

## EUROPEAN PATENT APPLICATION

(12)

(21) Application number: **93108788.6**

(22) Date of filing: **01.06.93**

(51) Int. Cl.⁵: **B64C  1/00**, B64C 39/06

(30) Priority: **14.06.92 RU 5054621**

(43) Date of publication of application:
**22.12.93 Bulletin  93/51**

(84) Designated Contracting States:
**DE FR GB**

(71) Applicant: **Abdurachmanovich, Muchamedov
Fatidin
Severnoe Chertanovo,
Dom. 6, Kor. 607, KV 832**

**Moscow 113648(RU)**

(72) Inventor: **Abdurachmanovich, Muchamedov
Fatidin
Severnoe Chertanovo,
Dom. 6, Kor. 607, KV 832
Moscow 113648(RU)**

(74) Representative: **Betten & Resch
Reichenbachstrasse 19
D-80469 München (DE)**

(54) **An aerobatic airplane.**

㊗ The invention belongs to aeronautical engineering sphere and can be used in the design of aerobatic airplanes, fighter airplanes. The technical results provided by the realization of a given invention are the following: the increase of the wing lift force at the sacrifice of incorporation of the center - section wing in the process of the lift force forming, and an airplane weight reduction at the sacrifice of more rational structural solution of the problem of loads transfer and their distribution from the outer wing panels to the fuselage. An airplane has the fuselage 1 and the wing, containing the center-section wing 2 and the outer wing panels 3.The tail unit consists of the tailplane 5 and the fins 6. The center-section wing 2 is designed in a disk form with leading 9 and trailing 10 edges along the disk generating line in plan. The engines 7 air intake ducts 11 are designed within the center-section wing 2 disk, and their inlet systems 12 are equiped by the controllable flaps 13, maintaining their complete or partial opening and closing to control an airplane focus position.

Fig. 3

EP 0 574 766 A1

The invention belongs to aeronautical engineering sphere and can be used in the design of aerobatic airplanes, fighter airplanes.

From the existing level of technique an aerobatic airplane F-18 is known, designed around the YF-17 airplane and taken as a prototype. It contains the fuselage with the wing, which consists of the center-section wing and the outer wing panels, swept along the leading edge; the gloves running from the fuselage nose part to the center-section wing; the tail unit which consists of the tailplane and the fins spaced apart and mounted with some V-angle in between on the front view; the powerplant with turbojet engines installed at the fuselage tail section; and the tricycle landing gear with the nosegear leg (see. An Aircraft manufacturing, volume 2, "The US and West European present-day airplanes", The All-Union Institute of Scientific and Technical Information (AISATI), Moscow, 1976, page 64-73, drawing 137,138,139).

Making an estimate of the technique level in existence, it is worth noting that most of analogous airplanes, including the prototype are designed according to a classical layout: the fuselage with the tail unit located at it's tail section, the wing connected to the fuselage on it's sides, with a center-section wing location in a fuselage ventral part (or the center-section wing passes through the fuselage), and it performs no other function except the function of the structural load-bearing member. In the airplanes of a blended layout the fuselage can be designed lifting, but the outer wing panels are also joined to the center-section wing, which performs only the structural-load-bearing function. As this takes place, the attempts to save the weight, and on the wing as well, do not meet with success, because the wing loads are transferred immediately to the fuselage units.

The problem, posed by the inventor - is the advent of an acrobatic airplane, possessing better lifting characteristics as compared to the prototype and having lesser weight, all other factors being equal.

The technical results provided by the realization of the invention under review are the following: the increase of the wing lift force at the sacrifice of an incorporation of the center-section wing in the process of lift force forming; an airplane overall weight reduction at the sacrifice of more rational structural solution of the problem of loads transfer and their distribution from the outer wing panels to the fuselage.

The problem in hand is solved and technical result is obtained by the fact that, in an acrobatic airplane containing the fuselage with the wing, which has the center-section wing and the outer wing panels swept along the leading edge; the gloves running from the fuselage nose part to the center-section wing; the tail unit consisting of the tailplane and the fins spaced apart and mounted with some V-angle in between on the front view; the powerplant with turbojet engines installed at the airplane tail section; and the tricycle landing gear with the nosegear leg, according to the invention the center-section wing is designed lifting in a disk form in plan with it's leading and trailing edges along the disk generating line, and the outer wing panels are connected to the disk - like center-section wing on it's sides, so that the middle of the root chord each of the outer wing panels coincides with the point of intersection of the center-section wing disk lateral axis with the root chord on retention of the center-section wing leading and trailing edges form along the disk generating line, the fuselage is designed displaced forward from the center-section wing along the airplane axis, smoothly mating with it and tapering off beyond the disk center of the center-section wing not reaching it's trailing edge, and the powerplant engines are located inside the airplane tail section, with engines air intake ducts designed within the center-section wing disk, and the inlet systems of engines air intake ducts are treated at the leading edge of the disk-like center-section wing in a form of longitudinal horizontal cutouts symmetrically disposed bilaterally along the airplane longitudinal axis and equiped by the controllable flaps for their opening and closing.

The invention is explained by the following drawings, where

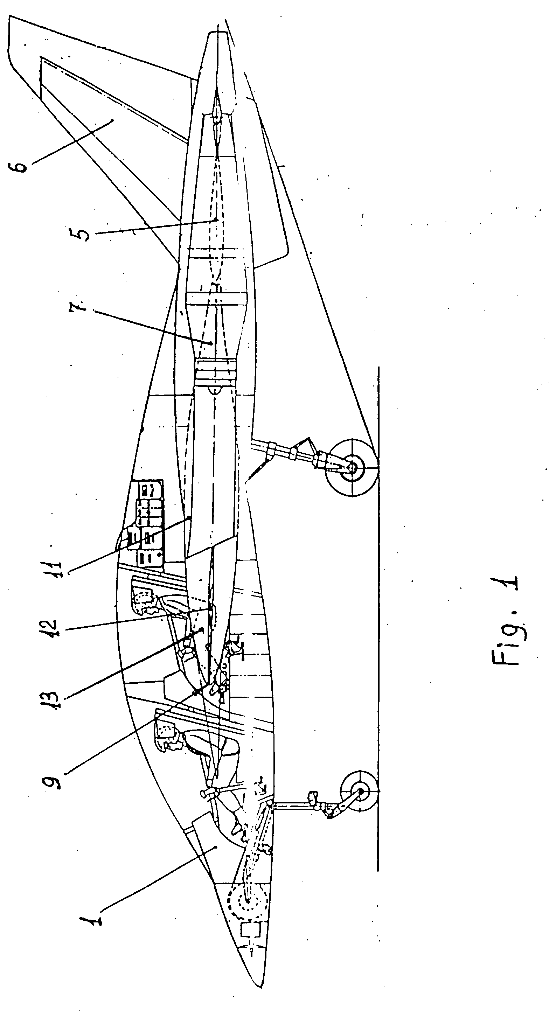

fig.1 - an aerobatic airplane is shown on the side view;

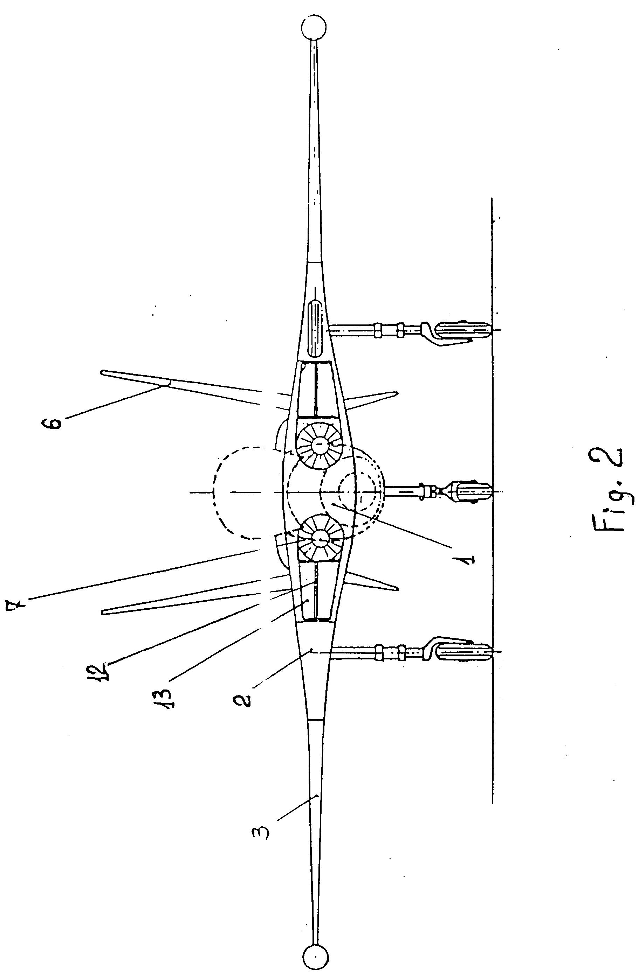

fig.2 - the same, the front view;

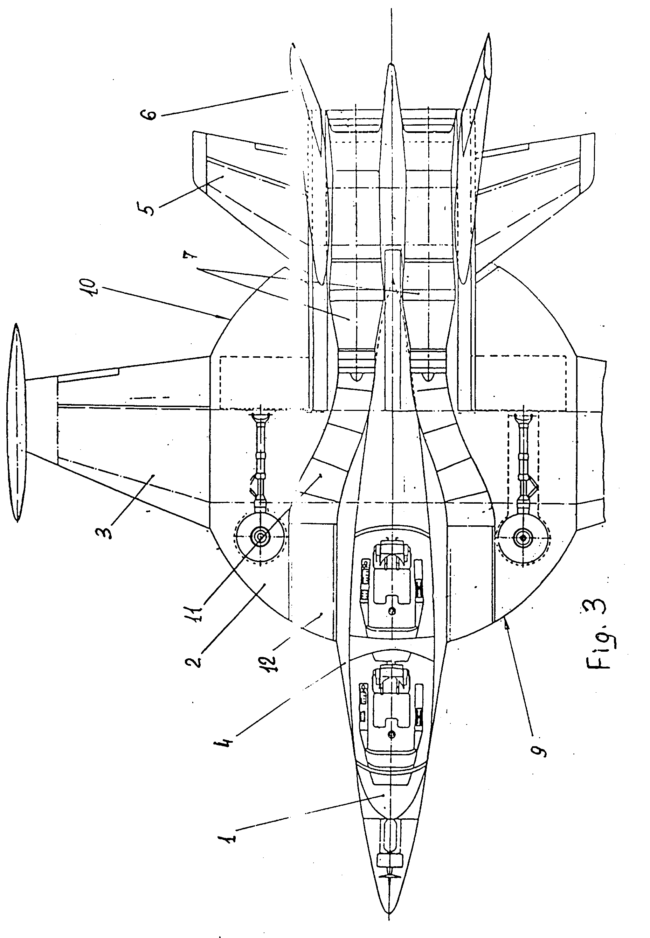

fig.3 - the same, the plan view.

An aerobatic airplane contains the fuselage 1 with the wing, which has the center-section wing 2 and the outer wing panels 3, swept along the leading edge. The gloves 4 run from the fuselage 1 nose part to the center-section wing 2. The tail unit consists of the tailplane 5 and the fins 6 spaced apart and mounted with some V-angle in between on the front view. The powerplant contains the turbojet engines 7, installed at the airplane tail section 8. The center-section wing 2 is designed lifting in a disk form in plan with leading 9 and trailing 10 edges along the disk generating line. The outer wing panels 3 are connected to the disk-like center-section wing 2 on it's sides so that the middle of the root chord each of the outer wing panels 3 coincides with the point of intersection of the center-section wing 2 disk lateral axis with the root chord on retention of center-section wing 2 leading 9 and trailing 10 edges form along the disk generating line. The fuselage 1 is designed displaced forward from the disk-like center-section wing 2 along the airplane axis, smoothly mating with

it, tapering off beyond the disk center of the center-section wing 2 not reaching it's trailing edge. The engines 7 are located inside the airplane tail section 8. The engines 7 air intake ducts 11 are designed within the center-section wing 2 disk. The inlet systems 12 of engines 7 air intake ducts 11 are treated at the leading 9 edge of the disk-like center-section wing 2 in a form of longitudinal horizontal cutouts symmetrically disposed bilaterally along the airplane longitudinal axis. The inlet systems 12 are equiped by the controllable flaps 13, which afford their opening and closing.

An aerobatic airplane is functioning in the following manner.

Making the takeoff run along the runway by landing gear an airplane initiates a takeoff. The outer wing panels 3 as well as lifting disk-like center-section wing 2 produce the lift force. As this takes place, the outer wing panels 3 loads are not transferred immediately to the fuselage 1 and are evenly distributed over the disk-like center-section wing 2, and only after this they are transferred to the fuselage 1, yet over the greater area, this permits weight reduction of the load-bearing structural units for resisting loads of the outer wing panels 3 and consequently reduces the weight of the whole airplane. In the flight the airplane is controlled by the deflection of the high-lift devices of the outer wing panels 3, as well as by the tailplane 5 and by the fins 6. The flaps 13 are designed for complete or partial opening and closing of the longitudinal cutouts of the inlet systems 12. This permits an aerobatic airplane focus position control and consequently permits the improvement of lifting, mass and dimensional characteristics as well as the maneuvering performance. Traditionally, the airplane has a given degree of longitudinal static stability $\overline{X}_F - \overline{X}_T$ = const, which is just maintained in the airplane under discussion by the focus position control at a sacrifice of closing and opening of the inlet systems 12 by flaps 13. When analysing the model of a given airplane the following data were secured: under the conditions of closed by the flaps 13 inlet systems 12 an airplane focus position is ~40% of the center-section wing 2 root chord, and under the conditions of opened inlet systems 12-is ~47% of the center-section wing 2 root chord.

Important features of the invention may be summarized as follows:

The increase of the wing lift force at the sacrifice of incorporation of the center - section wing in the process of the lift force forming, and an airplane weight reduction at the sacrifice of more rational structural solution of the problem of loads transfer and their distribution from the outer wing panels to the fuselage. An airplane has the fuselage 1 and the wing, containing the center-section wing 2 and the outer wing panels 3. The tail unit consists of the tailplane 5 and the fins 6. The center-section wing 2 is designed in a disk form with leading 9 and trailing 10 edges along the disk generating line in plan. The engines 7 air intake ducts 11 are designed within the center-section wing 2 disk, and their inlet systems 12 are equiped by the controllable flaps 13, maintaining their complete or partial opening and closing to control an airplane focus position.

Each one of the above-mentioned features or any combination of these features may be important for the invention.

## Claims

1. Aerobatic airplane having the fuselage (1) and the wing, containing the center-section wing (2) designed in a disk form and the outer wing panels (3), the tail unit consisting of the tailplane (5) and the fins (6).

2. Airplane according to claim 1, characterized in that the center-section wing (2) is designed in a disk form with leading (9) and trailing (10) edges along the disk generating line in plan.

3. Airplane according to claim 1 or 2, characterized in that the engines (7) air intake ducts (11) are designed within the center-section wing (2) disk, and their inlet systems (12) are equiped by the controllable flaps (13), maintaining their complete or partial opening and closing to control an airplane focus position.

4. Airplane according to claim 1, 2 or 3, characterized by one or several or by the combination of the following features: the airplane containing the fuselage 1 with the wing, which has the center-section wing 2 and the outer wing panels 3, swept along the leading edge; the gloves 4 running from the fuselage 1 nose part to the center-section wing 2; the tail unit, which consists of the tailplane 5 and the fins 6, spaced apart and installed with some V-angle in between on the front view; the powerplant with the turbojet engines 7 installed at the airplane tail section 8; and the tricycle landing gear with the nose landing gear leg, differs in that the center-section wing 2 is designed lifting in a disk form in plan with leading 9 and trailing 10 edges along it's generating line, and the outer wing panels 3 are connected to the disk-like center-section wing 2 on its sides so that the middle of the root chord each of them coincides with the itersection point of the center-section wing 2 disk longitudinal axis with the root chord on retention of the center-section wing 2 leading 9 and trailing 10 edges form along the disk generating line, the fuselage 1 is designed displaced forward from the disk-like center-section wing 2 along the airplane axis, smoothly mating it and tapering off beyond the center-section wing 2 disk center not reaching it's trailing 10 edge, and the powerplant engines 7 are located inside the airplane tail section 8, with engines 7 air intake ducts 11 designed within the center-section wing 2 disk, and the inlet systems 12 of engines 7 air intake ducts 11 are treated at the leading 9 edge of the disk-like center-section wing 2 in a form of longitudinal horizontal cutouts symmetrically disposed bilaterally along the airplane longitudinal axis and equiped by the controllable flaps 13 for their opening and closing.

Fig. 1

EP 0 574 766 A1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 343 768 (GARTZKE) <br> * column 2, line 23 - line 37; figures 1-3 * | 1,2 | B64C1/00 <br> B64C39/06 |
| A | | 4 | |
| | --- | | |
| A | US-A-4 568 042 (CARR) <br> * column 9, line 28 - line 54; figure 7 * | 3 | |
| | ----- | | |

|  |
|---|
| TECHNICAL FIELDS SEARCHED (Int. Cl.5) |
| B64C |

The present search report has been drawn up for all claims

| Place of search | Date of completion of the search | Examiner |
|---|---|---|
| THE HAGUE | 17 SEPTEMBER 1993 | ZERI A. |

EPO FORM 1503 03.82 (P0401)